# EUROPEAN PATENT SPECIFICATION

(11) **EP 1 275 598 B1**
(45) Date of publication and mention of the grant of the patent: **08.03.2006**
(21) Application number: 02254720.2
(22) Date of filing: 05.07.2002
(51) Int. Cl.: B65G 15/16, B65G 47/26, B65G 47/08

(54) **Conditioning of packages**
Behandlung von Verpackungen
Traitement d'emballages

(30) Priority: 09.07.2001 GB 0116746
(43) Date of publication of application: 15.01.2003
(73) Proprietor: ISHIDA EUROPE LIMITED, Birmingham B32 3DB (GB)
(72) Inventor: Bennett, Robert, Walsall, West Midlands, WS3 4EQ (GB)
(74) Representative: Stuart, Ian Alexander

(56) References cited:
- EP-A- 0 556 497
- GB-A- 2 316 926
- US-A- 4 443 955
- US-A- 6 129 200
- PATENT ABSTRACTS OF JAPAN vol. 2002, no. 02, 2 April 2002 (2002-04-02) & JP 2001 270611 A (KOMATSU ZENOAH CO), 2 October 2001 (2001-10-02)
- PATENT ABSTRACTS OF JAPAN vol. 2002, no. 02, 2 April 2002 (2002-04-02) & JP 2001 269598 A (KOMATSU ZENOAH CO), 2 October 2001 (2001-10-02)
- PATENT ABSTRACTS OF JAPAN vol. 1995, no. 11, 26 December 1995 (1995-12-26) & JP 07 196119 A (YOKO:KK), 1 August 1995 (1995-08-01)

## Description

The present invention relates to a method and apparatus for the conditioning of packages. It is particularly concerned with packages which are air tight bags of loose articles, especially fragile articles such as crisps and other snack foods.

EP-A-0 556 497 disclosed apparatus for feeding webs of irregularly-shaped small plastic novelties, using upper and lower conveyors between which the web is gripped. To accommodate different package sizes the upper conveyor can be raised or lowered by turning a knurled nut by contact with a package being conveyed.

In one aspect the invention provides conditioning apparatus for bags of fragile snack food articles comprising:
a vibratory conveyor for conveying packages in a conveying direction along a path;
a rotatable belt assembly extending adjacent said path, said assembly including a belt having a conditioning run extending generally in the conveying direction for contacting packages being conveyed along said path; said belt being mounted so as to be capable of displacement to vary the spacing of the conditioning run from the conveying path by contract with a package being conveyed. In use, vibration of the conveyor tends to urge packages intermittently against the conditioning run.

Preferably the conveyer means is a bowl feeder. Preferably the belt is mounted so that the conditioning run is capable of linear displacement towards and away from the path (this is generally vertical), and/or an arcuate, rocking displacement.

The belt preferably presents a gentle, yielding surface to packages. This may be due to its ready displacement and/or because it is intrinsically soft and yielding. Thus the belt may be a belt extending over two spaced pulleys. The belt material may be yielding, e.g. having a coating of resilient foam material.

The speed of rotation of the belt and/or the conveying speed are preferably variable.

In a second aspect the invention provides a method of conditioning articles, particularly air tight packages, comprising conveying them along a path and contacting them with a conditioning run of a rotatable belt assembly as described above. As well as conditioning the packages, the rotatable belt can be used to adjust the spacing of articles downstream of it by adjusting its rate of rotation.

An embodiment of the invention will now be described in more detail with reference to the accompanying drawings in which:
Fig 1 is a plan view of a conveyor means embodying the invention, having a bowl feeder and a rotatable belt assembly;
Fig 2 is a side elevation on a larger scale showing the rotatable belt assembly and part of the bowl feeder; and
Fig 3 is a front elevation corresponding to Fig 2.

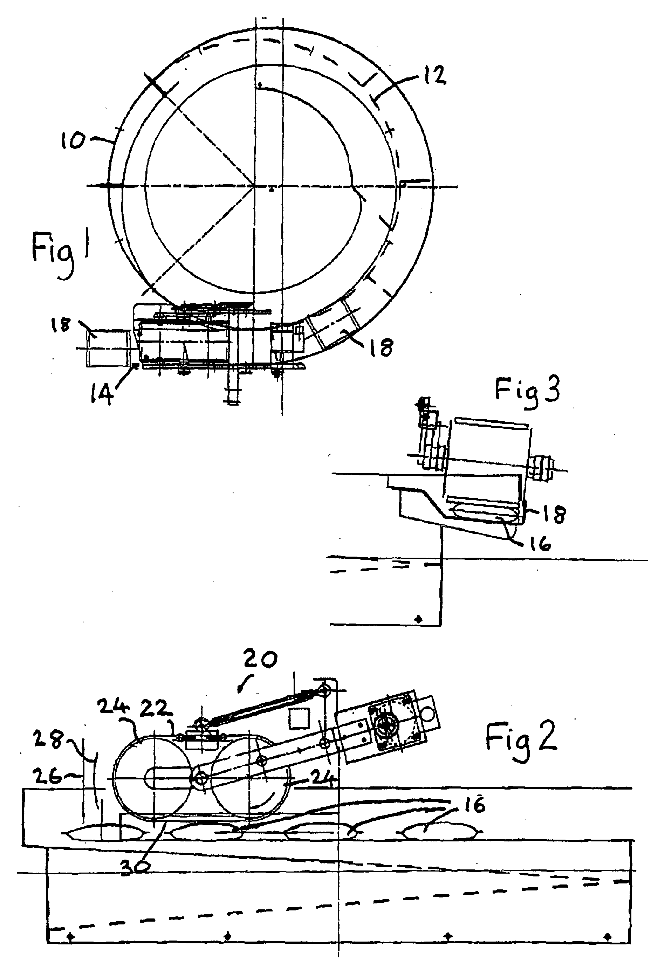

A bowl feeder is a large bowl having, internally, a spiral track leading up from a lower region to an outlet path at the top. The bowl is mounted displaceably and connected to a motor unit such that it can be vibrated vigorously, in a manner that tends to cause articles in the bowl to travel up the spiral track, and to exit along the outlet path. Fig 1 shows the bowl 10 and its spiral track 12, leading to the straight outlet path 14. As can be seen from Fig 3, the path has a lateral slope in the radially outward direction of the bowl so that an article 16 travelling along the path tends to contact a radially outer wall 18. This standardises the position of the articles, reduces the risk of their falling from the track, and also tends to orient them.

The illustrated articles 18 are packets of snack foods, such as crisps. The packets are air tight bags of thin film material.

The outlet path 14 passes under a rotatable belt assembly 20. This has a foam covered belt 22 which passes over two large diameter pulleys 24 which are driven by a speed-controlled motor. The belt assembly is carried by a support frame, which permits adjustment of height, and which also allows the belt unit to move (a) vertically as shown by arrow 26, and (b) with a rocking movement as shown by arrow 28.

The spacing of the belt unit is such that the lower, conditioning run 30 of the belt is spaced from the outlet path by a distance similar to the intended thickness of an article. Since the outlet path is part of the bowl conveyor, it vibrates in use, so that the gap between it and the belt run 30 varies. Thus articles passing through the gap are liable to be contacted by the belt. The contact is quite gentle, partly because of the nature of the foam covered belt, and partly because the mounting of the belt unit allows it to move away if it is pushed hard by an article.

The belt is rotated so that the conditioning run 30 travels in the same direction as the articles 18 being conveyed. The gentle contact, assisted by the vertical and/or rocking movement of the belt unit, gently presses an article. For an air tight gas-filled bag, this tends to "plump" the bag, restoring it to its optimum conformation.

The speed of the belt may be controlled so that it is the same as the speed at which the articles are leaving the belt conveyer. However it can also be made different.

A higher belt speed can be used to increase the spacing of articles on a conveyor downstream of the belt assembly. This can be useful to give downstream machines more time for handling the articles.

## Claims

1. Package conditioning apparatus suitable for conditioning package which are airtight bags of fragile snack food articles, said apparatus comprising:
a vibratory conveyor (10) for conveying packages (18) in a conveying direction along a path (12,14);
a rotatable belt assembly (20) extending adjacent said path (14), said assembly including a belt (22) having a conditioning run (30) extending generally in the conveying direction for contacting packages (18) being conveyed along said path such that, in use, vibration of said conveyor(10) is such as to tend to vary its spacing from the conditioning run (30) so that a conveyed package (18) is intermittently urged against it ; said belt (22) being mounted so as to be displaceable to vary the spacing of the conditioning run (30) from the conveying path by contact with a package being conveyed.

2. Apparatus according to claim 1 wherein the vibrating conveyor is a bowl feeder (10, 12).

3. Apparatus according to any preceding claim wherein the belt (22) is mounted so that the conditioning run (30) is capable of linear displacement towards and away from the path (14).

4. Apparatus according to claim 1 or claim 2 wherein the belt (22) is mounted so that the conditioning run (30) is capable of an arcuate, rocking displacement.

5. Apparatus according to any preceding claim wherein the belt assembly (20) includes two spaced pulleys (24) over which the belt (22) extends.

6. Apparatus according to any preceding claim wherein the belt (22) has a coating of resilient foam material.

7. Apparatus according to any preceding claim wherein the speed of rotation of the belt (22) is variable.

8. A method of conditioning packages (18) comprising conveying them along a path (14) and contacting them with a conditioning run (30) of a rotatable belt assembly (20) of apparatus according to any preceding claim, wherein the packages are airtight bags of fragile snack food articles.

## Patentansprüche

1. Verpackungsbehandlungsvorrichtung, die zur Behandlung von Verpackungen, bei denen es sich um luftdichte Beutel für bruchanfällige Snackartikel handelt, geeignet ist, wobei die Vorrichtung Folgendes umfasst:
einen Schwingförderer (10) zum Befördern von Verpackungen (18) in einer Förderrichtung entlang eines Pfads (12, 14);
eine drehbare Gurtanordnung (20), die benachbart zum Pfad (14) verläuft, welche Anordnung einen Gurt (22) umfasst, welcher einen sich im Allgemeinen in die Förderrichtung erstreckenden Behandlungsdurchlauf (30) zum Kontaktieren der entlang dem Pfad beförderten Verpackungen (18) aufweist, sodass bei der Verwendung das Schwingen des Förderers (10) so gerichtet ist, dass sein Abstand zum Behandlungslauf (30) variiert, sodass eine beförderte Verpackung (18) intermittierend gegen ihn gedrückt wird;
wobei der Gurt (22) so angebracht ist, dass er zum Variieren des Abstands des Behandlungsdurchlaufs (30) zum Förderpfad durch den Kontakt mit einer beförderten Verpackung auslenkbar ist.

2. Vorrichtung nach Anspruch 1, worin der Schwingförderer ein Kessel-Schwingförderer (10, 12) ist.

3. Vorrichtung nach einem der vorangegangenen Ansprüche, worin der Gurt (22) so angebracht ist, dass der Behandlungsdurchlauf (30) zur linearen Verschiebungsbewegung in Richtung zum Pfad (14) hin und von diesem weg fähig ist.

4. Vorrichtung nach Anspruch 1 oder 2, worin der Gurt (22) so angebracht ist, dass der Behandlungsdurchlauf (30) zu einer bogenförmigen, wiegenden Verschiebungsbewegung fähig ist.

5. Vorrichtung nach einem der vorangegangenen Ansprüche, worin die Gurtanordnung (20) zwei beabstandete Rollen (24) umfasst, über die sich der Gurt (22) erstreckt.

6. Vorrichtung nach einem der vorangegangenen Ansprüche, worin der Gurt (22) eine Beschichtung aus einem federnden Schaummaterial aufweist.

7. Vorrichtung nach einem der vorangegangenen Ansprüche, worin die Umlaufgeschwindigkeit des Gurts (22) variabel ist.

8. Verfahren zur Behandlung von Verpackungen (18), umfassend ihre Beförderung entlang eines Pfads (14) und das Kontaktieren selbiger mit einem Behandlungsdurchlauf (30) einer drehbaren Gurtanordnung (20) der Vorrichtung nach einem der vorangegangen Ansprüche, worin die Verpackungen luftdichte Beutel für bruchanfällige Snackartikel sind.

## Revendications

1. Appareil de conditionnement de colis approprié pour le conditionnement de colis qui sont des sachets étanches à l'air d'articles d'en-cas alimentaires fragiles, ledit appareil comprenant :
un transporteur vibrant (10) pour transporter de s colis (18) dans une direction de transport le long d'un trajet (12, 14) ;
un assemblage de courroie rotative (20) s'étendant en position adjacente audit trajet (14), ledit assemblage incluant une courroie (22) ayant un parcours de conditionnement (30) s'étendant généralement dans la direction de transport pour entrer en contact avec des colis (18) transportés le long dudit trajet de telle sorte que, pendant l'utilisation, la vibration dudit transporteur (10) est telle qu'elle tend à modifier son espacement du parcours de conditionnement (30) de façon à ce qu'un colis (18) transporté soit poussé par intermittence contre celui-ci ; ladite courroie (22) étant montée de façon à pouvoir être déplacée afin de modifier l'espacement entre le parcours de conditionnement (30) et le trajet de transport par un contact avec un colis transporté.

2. Appareil selon la revendication 1, où le transporteur vibrant est un bol de distribution (10, 12).

3. Appareil selon l'une quelconque des revendications précédentes, dans lequel la courroie (22) est montée de telle sorte que le parcours de conditionnement (30) puisse effectuer un déplacement linéaire dans la direction et à l'opposé du trajet (14).

4. Appareil selon la revendication 1 ou la revendication 2, dans lequel la courroie (22) est montée de telle sorte que le parcours de conditionnement (30) puisse effectuer un déplacement arqué d'oscillation.

5. Appareil selon l'une quelconque des revendications précédentes, dans lequel l'assemblage de courroie (20) inclut deux poulies (24) espacées sur lesquelles s'étend la courroie (22).

6. Appareil selon l'une quelconque des revendications précédentes, dans lequel la courroie (22) a un revêtement de matériau alvéolaire résilient.

7. Appareil selon l'une quelconque des revendications précédentes, dans lequel la vitesse de rotation de la courroie (22) est variable.

8. Procédé de conditionnement de colis (18) transportant ceux-ci le long d'un trajet (14) et les mettant en contact avec un parcours de conditionnement (30) d'un assemblage de courroie rotative (20) d'un appareil selon l'une quelconque des revendications précédentes, dans lequel les colis sont des sachets étanches à l'air d'articles d'en-cas alimentaires fragiles.
